## Europäisches Patentamt
## European Patent Office
## Office européen des brevets

(11) Veröffentlichungsnummer : **0 136 437**
**B1**

(12) # EUROPÄISCHE PATENTSCHRIFT

(45) Veröffentlichungstag der Patentschrift :
**19.10.88**

(51) Int. Cl.⁴ : **G 01 L 5/16, G 01 L 5/22**

(21) Anmeldenummer : **84108614.3**

(22) Anmeldetag : **20.07.84**

(54) Mehrkomponentenkraft- und -momentenmesskörper mit Dehnungsmessstreifen.

(30) Priorität : 27.07.83 DE 3327141
20.02.84 DE 3406059

(43) Veröffentlichungstag der Anmeldung :
**10.04.85 Patentblatt 85/15**

(45) Bekanntmachung des Hinweises auf die Patenterteilung : 19.10.88 Patentblatt 88/42

(84) Benannte Vertragsstaaten :
**DE FR GB IT SE**

(56) Entgegenhaltungen :
DE-B- 2 122 924
DE-B- 2 529 796
DE-B- 2 727 704
US-A- 4 046 005
US-A- 4 094 192
FEINWERKTECHNIK & MESSTECHNIK, Band 85, Nr. 2, 1977; D. HELMS "Entwicklung eines Sechs-Komponenten Kraft-Moment-Aufnehmers", Seiten 75-81
ELEKTRONIK, Band 31, Nr. 8, 23 April 1982, München; R. DILLMANN et al. "Kraft-Momenten-Sensorsystem für Industrieroboter", Seiten 89-95
ELEKTRONIK, Band 31, Nr. 25, 17 Dezember 1982; "Tastsinn für Industrieroboter", Seite 11

(73) Patentinhaber : Siemens Aktiengesellschaft Berlin und München
Wittelsbacherplatz 2
D-8000 München 2 (DE)

(72) Erfinder : Fritz, Harald, Dipl.-Ing.
Hebelstrasse 5
D-7517 Waldbronn (DE)

EP 0 136 437 B1

# 0 136 437

**Beschreibung**

Die Erfindung betrifft einen Mehrkomponentenkraft- und -momentenmeßkörper mit Dehnungsmeßstreifen.

Aus der DE-B-21 22 924 ist eine Meßanordnung bekannt, bei der separate Halbbrücken mit den Dehnungsmeßstreifen gebildet sind, die so auf dem Meßkörper plaziert sind, daß eine Erfassung der Kraftkomponenten möglich ist. Ein weiterer Meßkörper ist aus der US-A-4 094 192 bekannt.

Der Erfindung lag die Aufgabe zugrunde, einen Meßkörper mit umfangreichen Auswertemöglichkeiten zu zu schaffen.

Die Zerlegung der auf den Meßkörper einwirkenden Kräfte in Komponenten, deren Richtung durch ein Koordinatensystem festgelegt ist, geschieht bei der Erfindung mittels selektiv komponentenempfindlicher Dehnungsmeßstreifen auf einer einzeigen einheitlichen Meßfeder. Die Selektion durch Lage und Orientierung der Dehnungsmeßstreifen auf einer einheitlichen Meßfeder ist naturgemäß unvollkommen, da eine Art Übersprechen der verschiedenen Kräfte auf die Dehnungsmeßstreifen nicht in jedem Falle zu vermeiden ist.

Es ist jedoch mit verhältnismäßig geringem und gegenüber einer aufwendigen mechanischen Gestaltung der Meßkörper billigerem elektronischen Aufwand möglich, die Selektion so weit zu verbessern, daß das Meßergebnis sich nicht von dem der Lösungen des Standes der Technik unterscheidet.

Zweckmäßig besteht der Meßkörper aus einem an einem Ende fest eingespannten Hohlzylinder. Sein freies Ende ist mit einem darübergestülpten Krafteinleitungsbecher starr verbunden. Der Rand des Krafteinleitungsbechers endet etwa im mittleren Drittel der wirksamen Länge des Hohlzylinders und legt dort eine Einleitungsebene für Querkräfte fest. Auf Umfangslinien des Hohlzylinders, die als Schnittlinien der Krafteinleitungsebene und mindestens einer zweiten parallel dazu liegenden Querschnittsebene mit der Mantelfläche des Hohlzylinders entstehen, sind mindestens sieben an einem in der Krafteinleitungsebene liegenden XY-Koordinatensystem orientierte Dehnungsmeßstreifen so aufgeklebt, daß je zwei in Richtung der Zylinderlängsachse und senkrecht dazu gleich ausgerichtete Dehnungsmeßstreifen sich paarweise diametral gegenüberstehen. Mindestens zwei weitere Dehnungsmeßstreifen sind unter 45° zur Zylinderlängsachse mit unterschiedlichem Vorzeichen geneigt angeordnet. Mit dieser Bestückung sind drei Kräfte und drei Momente, die in einem räumlichen rechtwinkligen Koordinatensystem orientiert sind, meßbar. Für eine kleinere Anzahl von zu messenden Kräften und/oder Momenten reichen weniger Dehnungsmeßstreifen aus.

Bei einem Ausführungsbeispiel der Erfindung sind auf der von der Krafteinleitungsebene bestimmten ersten Umfangslinie zwei in Umfangsrichtung orientierte Dehnungsmeßstreifen einander diametral gegenüberliegend angeordnet. Mit dazu gleichen Azimutwinkeln sind zwei axial orientierte Dehnungsmeßstreifen sowie ein um 90° dazu versetztes Paar mit entgegengesetzten Vorzeichen um 45° gegen die Achsrichtung geneigte Dehnungsmeßstreifen auf einer von der ersten Umfangslinie einen Abstand aufweisenden zweiten Umfangslinie angeordnet. Auf einer auf der anderen Seite der Umfangslinie liegenden weiteren Umfangslinie liegt ein Paar mit gleichen Vorzeichen um 45° gegen die Achsrichtung geneigte Dehnungsmeßstreifen unter gleichem Azimutwinkel wie das erste Paar geneigter Dehnungsmeßstreifen.

Bei einem zweiten Ausführungsbeispiel der Erfindung liegen auf der von der Krafteinleitungsebene bestimmten Umfangslinie zwei in Umfangsrichtung orientierte Dehnungsmeßstreifen einander diametral gegenüber. Gegen diese sind auf der gleichen Umfangslinie, um einen Azimutwinkel von 90° versetzt, ein axial orientierter Dehnungsmeßstreifen bzw. zwei übereinanderliegende, mit entgegengesetzten Vorzeichen um 45° gegen die Achsrichtung geneigt orientierte Dehnungsmeßstreifen angeordnet. Auf einer zweiten Umfangslinie sind zwei um einen Azimutwinkel von 90° gegeneinander versetzte axial bzw. in Umfangsrichtung orientierte Dehnungsmeßstreifen angebracht.

Bei einem weiteren vorteilhaften Ausführungsbeispiel sind auf der von der Krafteinleitungsebene bestimmten Umfangslinie zwei in Umfangsrichtung orientierte, diametral gegenüberliegende Dehnungsmeßstreifen und auf der weiteren Umfangslinie zwei übereinanderliegend mit entgegengesetztem Vorzeichen um 45° gegen die Achsrichtung geneigt orientierte Dehnungsmeßstreifen in gleichem Azimutwinkel wie einer der auf der ersten Umfangslinie angeordneten Dehnungsmeßstreifen und zwei hierzu jeweils um + 90° bzw. — 90° Azimutwinkel versetzte, axial orientierte Dehnungsmeßstreifen angebracht, und auf der zweiten Umfangslinie sind zwei um 90° Azimutwinkel gegeneinander versetzte, axial bzw. in 45° zur Umfangslinie geneigt orientierte Dehnungsmeßstreifen angebracht, wobei der geneigte Dehnungsmeßstreifen im gleichen Azimutwinkel wie die übereinanderliegenden Dehnungsmeßstreifen angeordnet ist. Das letztgenannte Ausführungsbeispiel ist besonders deswegen vorteilhaft, weil eine verbesserte Meßwerterfassung durch eine einfachere Rechenmatrix mit weniger Einzelwerten möglich ist, wodurch insbesondere Rechenzeit gespart ist und Fehlerquellen vermieden sind.

Zweckmäßig sind die Dehnungsmeßstreifen durch ebensoviele einendig parallelgeschaltete hochohmige Widerstände zu zwischen den Klemmen einer Stromquelle parallelschaltbaren Serienkombinationen je eines Dehnungsmeßstreifens und eines Festwiderstandes ergänzt. Die Verbindungspunkte zwischen Dehnungsmeßstreifen und Festwiderständen sind herausgeführt.

2

Bei einer anderen Ausführung der Verschaltung sind die Festwiderstände durch einendig parallelgeschaltete Stromquellen ersetzt. Die parallelgeschalteten Enden dieser Stromquellen sind mit den parallelgeschalteten Enden der Dehnungsmeßstreifen direkt verbunden.

Mit Vorteil kann die letztgenannte Verschaltungsart der Dehnungsmeßstreifen so abgeändert werden, daß insgesamt nur zwei einendig parallelgeschaltete Stromquellen vorgesehen sind, die durch Schaltmittel jeweils mit zwei der Dehnungsmeßstreifen verbindbar sind.

Zur letztbeschriebenen Schaltungsart kann noch ergänzt werden, daß es auch möglich ist, an zwei ausgewählten Dehnungsmeßstreifen zwei Messungen jeweils mit vertauschten Anschlüssen der Stromquellen durchzuführen. Fehler durch unterschiedliche Kontaktwiderstände werden dadurch ausgemittelt.

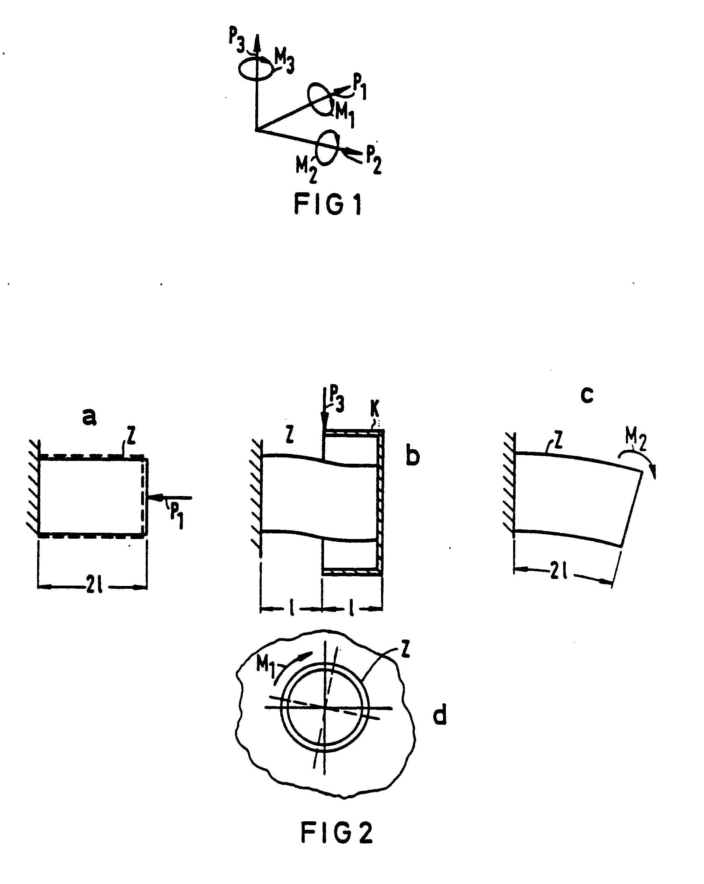

Die Erfindung wird an sieben Figuren erläutert. Figur 1 stellt ein Beispiel für im Raum orientierte Kräfte und Momente dar.

In den Figuren 2a bis 2d sind Verformungen gezeigt, die von diesen Kräften an einem zylindrischen Meßkörper hervorgerufen werden.

In den Figuren 3a bis 3c ist in einem Längsschnitt ein Meßkörper nach der Erfindung dargestellt sowie die Anordnung der Dehnungsmeßstreifen und die Orientierung der Kraft- und Momentekomponenten.

In den Figuren 4 und 5 sind für den gleichen Meßkörper andere Dehnungsmeßstreifenverteilungen dargestellt. Figuren 6 und 7 zeigen verschiedene Verschaltungsbeispiele für die Dehnungsmeßstreifen.

In Figur 1 sind drei im Raum orientierte Kräfte $P_1$, $P_2$, $P_3$ neben drei Drehmomenten $M_1$, $M_2$, $M_3$ dargestellt. Die Kräfte liegen in den Vorzugsrichtungen eines räumlichen rechtwinkligen Koordinatensystems. Die Momente sind dazu, in Pfeilrichtung der Kräfte gesehen, um die jeweilige Achsrichtung rechtsdrehend angeordnet. Mit bekannten Meßkörpern und mit den Meßkörpern nach der Erfindung können natürlich auch Kräfte, die in anderen Richtungen wirken, erfaßt werden. Diese Kräfte werden jedoch immer in ihre Komponenten in den gezeichneten Vorzugsrichtungen zerlegt.

Kräfte und Momente der in Figur 1 gezeigten Art rufen in einem zylindrischen Meßkörper nach der Erfindung die in den Figuren 2a bis 2d dargestellten Verformungen hervor. So ist in der Figur 2a zu erkennen, wie ein Meßzylinder Z von der Länge 2 l durch eine axial wirkende Druckkraft $P_1$ verkürzt und gleichzeitig aufgeweitet wird. In Figur 2b ist gezeigt, wie eine Querkraft $P_3$, die auf den Rand eines Krafteinleitungsbechers K wirkt, den Meßzylinder Z S-förmig verbiegt. Der Rand des Krafteinleitungsbechers K bestimmt dabei die Krafteinleitungsebene für die Querkräfte, sie liegt im dargestellten Beispiel in der Mitte des Meßzylinders. In der Figur 2c wirkt auf den Meßzylinder Z das Drehmoment $M_2$. Es stellt eine reine Biegebelastung für den Meßzylinder Z dar. In Figur 2d wirkt auf den Meßzylinder Z um seine Längsachse das Drehmoment $M_1$ und bewirkt eine Torsion des Meßzylinders.

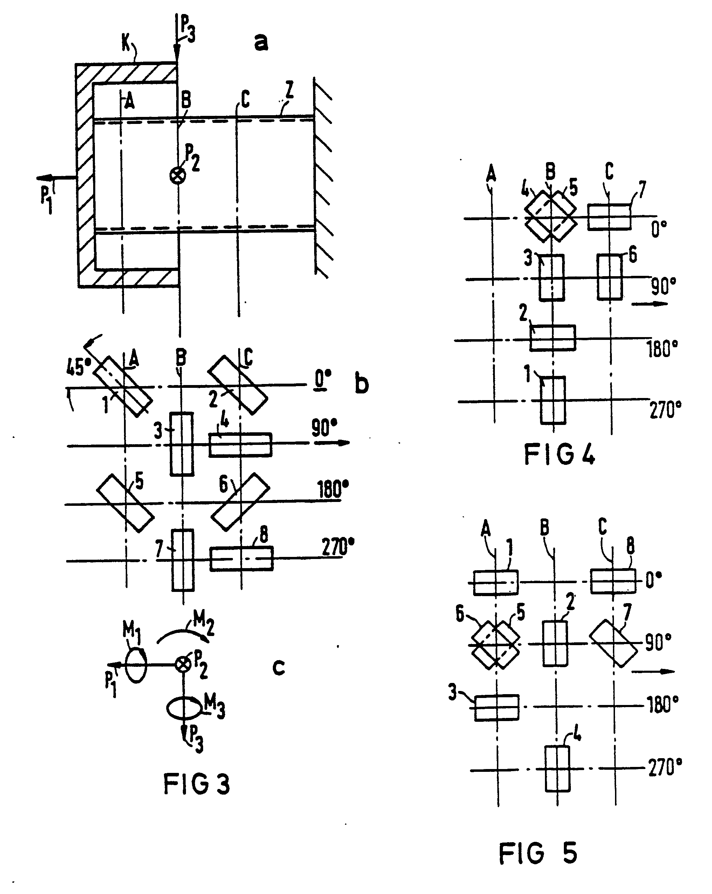

In der Figur 3a ist wieder der Meßzylinder Z und der Krafteinleitungsbecher K dargestellt. Die durch den Rand des Krafteinleitungsbechers K festgelegte Querschnittsebene ergibt im Schnitt mit der Zylindermantelfläche eine Umfangslinie B. Auf beiden Seiten zur Umfangslinie B verlaufen im gleichen Abstand zwei weitere Umfangslinien A und C. In Figur 3b ist die Verteilung und Orientierung von acht Dehnungsmeßstreifen 1 ... 8 auf den Umfangslinien A, B und C dargestellt. Mantellinien des Meßzylinders Z, auf denen die Dehnungsmeßstreifen liegen, sind durch ihren Azimutwinkel gekennzeichnet.

In Figur 3c sind nochmals die Kräfte $P_1$ ... $P_3$ und Momente $M_1$ ... $M_3$ mit ihren Raumrichtungen gezeigt. In der folgenden als Verformungsmatrix bezeichneten Tabelle sind die normierten Dehnungswirkungen der Kräfte $P_1$, $P_2$, $P_3$ und der Momente $M_1$, $M_2$, $M_3$ auf die Dehnungsmeßstreifen aufgelistet. Zusätzlich ist die Lage bezüglich der Umfangslinien, der Azimutwinkel auf den Umfangslinien und die Orientierung gegenüber der Zylinderachsrichtung für die Dehnungsmeßstreifen 1 ... 8 eingetragen.

Verformungsmatrix

| DMS | Umfangs-linie | Azimut-winkel | Orien-tierung | $P_1$ | $P_2$ | $P_3$ | $M_1$ | $M_2$ | $M_3$ |
|---|---|---|---|---|---|---|---|---|---|
| 1 | A | $0°$ | $-45°$ | +0,5 | 0 | +0,5 | -1 | +1 | 0 |
| 2 | C | $0°$ | $-45°$ | +0,5 | 0 | -0,5 | -1 | +1 | 0 |
| 3 | B | $90°$ | $90°$ | -0,3 | 0 | 0 | 0 | 0 | -0,3 |
| 4 | C | $90°$ | $0°$ | +1 | -1 | 0 | 0 | 0 | +1 |
| 5 | A | $180°$ | $-45°$ | +0,5 | 0 | -0,5 | -1 | -1 | 0 |
| 6 | C | $180°$ | $+45°$ | +0,5 | 0 | +0,5 | +1 | -1 | 0 |
| 7 | B | $270°$ | $90°$ | -0,3 | 0 | 0 | 0 | 0 | +0,3 |
| 8 | C | $270°$ | $0°$ | +1 | +1 | 0 | 0 | 0 | -1 |

Aus dieser Verformungsmatrix können Halbbrückenschaltungen zwischen je zwei Dehnungsmeßstreifen ausgesucht werden, deren Meßwert nur eine möglichst begrenzte Anzahl von Kraft- und Momentekomponenten mit Gewichtungen nach der Verformungsmatrix enthalten. Eine solche Aufstellung liegt in der folgenden Tabelle vor.

| Abtastung der DMS | Meßwert | setzt sich zusammen aus: |
|---|---|---|
| 3 – 8 | C1 | $-1,3\ P_1 - P_2 + 0,7\ M_3$ |
| 4 – 7 | C2 | $+1,3\ P_1 - P_2 + 0,7\ M_3$ |
| 4 – 8 | C3 | $-2\ P_2 - 2\ M_3$ |
| 5 – 6 | C4 | $-P_3 - M_1$ |
| 1 – 2 | C5 | $+P_3$ |
| 3 – 7 | C6 | $-0,6\ M_3$ |
| 2 – 5 | C7 | $+M_2$ |

Es ist eine genügend große Anzahl von Meßwerten zu bestimmen, um damit genügend viele Gleichungen zu erhalten, aus denen die Einzelkomponenten in den Grundrichtungen berechnet werden können. in der folgenden Aufstellung sind diese Gleichungen aufgeführt.

$$-3,33 \cdot C6 + C3 = +2\ M_3 - 2\ P_2 - 2\ M_3$$
$$P_2 = C6 \cdot (-3,33) + C3$$

$$C5 + C4 = +P_3 - P_3 - M_1$$
$$M_1 = -C5 - C4$$

$$M_2 = C7$$

$$M_3 = C6 \cdot (-1,66)$$

$$C2 - C1 = -1,3\ P_1 - P_2 + 0,7\ M_3$$
$$-1,3\ P_1 + P_2 - 0,7\ M_3$$
$$= -2,6\ P_1$$
$$P_1 = C2 \cdot (-0,385) - C1 \cdot (-0,385)$$

$$P_3 = C5$$

Figur 4 zeigt die Verteilung von sieben Dehnungsmeßstreifen auf den Umfangslinien B und C des Meßzylinders Z bei einem zweiten Ausführungsbeispiel der Erfindung. Die Umfangslinie A ist zwar gezeichnet, jedoch nicht mit Dehnungsmeßstreifen besetzt. Die Dehnungsmeßstreifen sind mit 1 ... 7 durchnumeriert. Die Verformungsmatrix der Dehnungsmeßstreifen 1 ... 7 ist in der folgenden Tabelle enthalten.

| DMS | $P_1$ | $P_2$ | $P_3$ | $M_1$ | $M_2$ | $M_3$ |
|---|---|---|---|---|---|---|
| 1 | -0,3 | 0 | 0 | 0 | 0 | +0,3 |
| 2 | +1 | 0 | 0 | 0 | -1 | 0 |
| 3 | -0,3 | 0 | 0 | 0 | 0 | -0,3 |
| 4 | +0,5 | 0 | 0 | +1 | +0,5 | 0 |
| 5 | +0,5 | 0 | 0 | -1 | +0,5 | 0 |
| 6 | -0,3 | -0,3 | 0 | 0 | 0 | -0,3 |
| 7 | +1 | 0 | +1 | 0 | +1 | 0 |

Daraus können nach den oben schon genannten Gesichtspunkten wieder Gleichungssysteme aufgestellt werden, die zum folgenden Ergebnis führen. Die Klammerausdrücke auf der linken Seite der Gleichheitszeichen stellen dabei Abtastergebnisse von zwischen den numerierten Dehnungsmeßstreifen gebildeten Halbbrückenschaltungen dar.

$$
\begin{aligned}
(4\text{-}5) &= 2\,M_1 \\
(1\text{-}3) &= 0,6\,M_3 \\
(1\text{-}6)\text{-}(1\text{-}3) &= 0,3\,P_2 \\
(4\text{-}3)\text{-}(1\text{-}2) + (2\text{-}4) &= 2,5\,P_1 \\
(1\text{-}2)\text{-}(4\text{-}3)\text{-}2P_1\text{-}M_1 &= 1,5\,M_2 \\
(2\text{-}7) + 2\,M_2 &= -P_3
\end{aligned}
$$

In der Figur 5 ist wiederum eine Verteilung und Orientierung von acht Dehnungsmeßstreifen 1 ... 8 auf den Umfangslinien A, B und C mit der Angabe der Azimutwinkel dargestellt.
Verformungsmatrix

| DMS | Umfangs-linie | Azimut-winkel | Orien-tierung | $P_1$ | $P_2$ | $P_3$ | $M_1$ | $M_2$ | $M_3$ |
|---|---|---|---|---|---|---|---|---|---|
| 1 | A | $0°$ | $0°$ | +1 | 0 | -1 | 0 | -1 | 0 |
| 2 | B | $90°$ | $90°$ | -0,3 | 0 | 0 | 0 | 0 | +0,3 |
| 3 | A | $180°$ | $0°$ | +1 | 0 | +1 | 0 | +1 | 0 |
| 4 | B | $270°$ | $90°$ | -0,3 | 0 | 0 | 0 | 0 | -0,3 |
| 5 | A | $90°$ | $+45°$ | +0,5 | -0,5 | 0 | -1 | 0 | -0,5 |
| 6 | A | $90°$ | $-45°$ | +0,5 | -0,5 | 0 | +1 | 0 | -0,5 |
| 7 | C | $90°$ | $-45°$ | +0,5 | +0,5 | 0 | +1 | 0 | -0,5 |
| 8 | C | $0°$ | $0°$ | +1 | 0 | +1 | 0 | -1 | 0 |

Auch aus dieser Verformungsmatrix können nach den schon genannten Gesichtspunkten Gleichungssysteme aufgestellt werden, die zu der unten dargestellten Aufstellung führen. Die Klammerausdrücke stellen auch hier gemäß dem Ausführungsbeispiel nach der Figur 5 Meßergebnisse von zwischen den numerierten Dehnungsmeßstreifen gebildeten Halbbrückenschaltungen dar.

$$
\begin{aligned}
(1\text{-}2) &= 1,3\,P_1\text{-}P_3\text{-}M_2\text{-}0,3\,M_3 \\
(4\text{-}3) &= -1,3\,P_1\text{-}P_3\text{-}M_2\text{-}0,3\,M_3 \\
(1\text{-}2)\text{-}(4\text{-}3) &= 2,6\,P_1 \\
(7\text{-}6) &= +P_2 \\
(8\text{-}1) &= 2\,P_3 \\
(6\text{-}5) &= 2\,M_1 \\
(3\text{-}1) &= 2\,P_3 + 2\,M_2 \\
(8\text{-}1) &= 2\,P_3 \\
(3\text{-}1)\text{-}(8\text{-}1) &= 2\,M_2 \\
(2\text{-}4) &= 0,6\,M_3
\end{aligned}
$$

Weiterhin wäre noch ein direkter Abgriff von $(3\text{-}8) = 2\,M_2$ rechentechnisch einfach möglich ; beim dargestellten Ausführungsbeispiel ist dies jedoch aus schaltungstechnischen Gründen nicht durchgeführt worden.

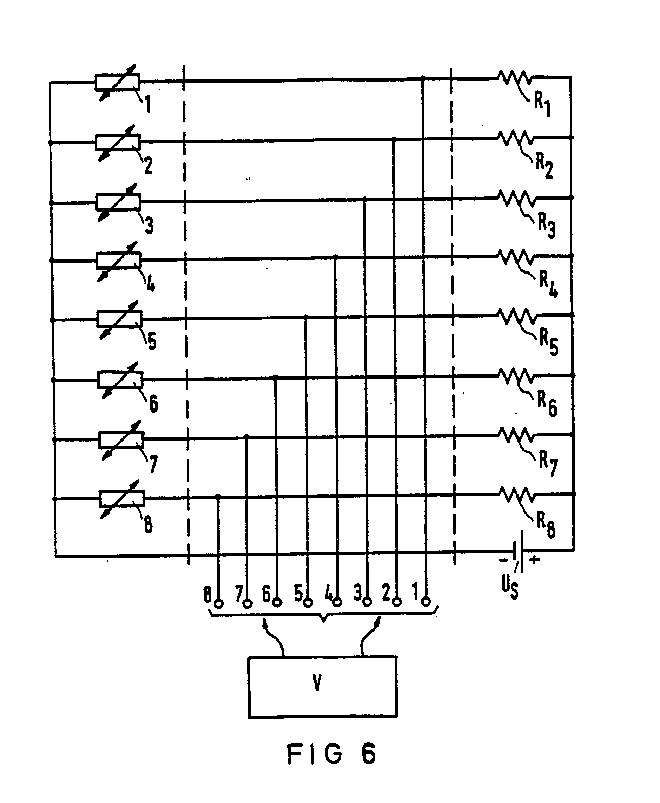

In Figur 6 ist eine Schaltung dargestellt, mit der die einendig miteinander parallelgeschalteten Dehnungsmeßstreifen 1 ... 8 durch ebensoviele Festwiderstände R, $R_1$ ... $R_8$ zu Brückenschaltungen ergänzt werden. Verbindungspunkte der Dehnungsmeßstreifen und Festwiderstände sind mit den gleichen Bezugsziffern versehen, sie sind herausgeführt, an ihnen kann jeweils mittels eines Voltmeters V eine Brückenmeßspannung abgegriffen werden. Messung und Rechnungen sowie deren Auswertung sind mit Hilfe eines entsprechend programmierten Mikroprozessors durchführbar.

Eine ähnliche Schaltung ergibt sich, wenn die Festwiderstände $R_1$ ... $R_8$ durch Konstantstromquellen

ersetzt werden. Eine Speisestromquelle $U_S$ entfällt dann. Die parallelgeschalteten Enden der Konstantstromquellen sind direkt mit den parallelgeschalteten Enden der Dehnungsmeßstreifen verbunden.

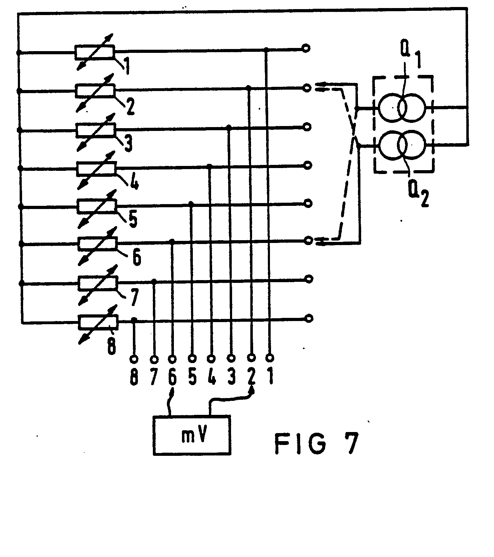

Figur 7 zeigt ein Ausführungsbeispiel der Verschaltung der Dehnungsmeßstreifen, bei der die Konstantstromquellen, die bei der Beschreibung der Figur 5 erwähnt sind, durch zwei einendig parallelgeschaltete Konstantstromquellen $Q_1$, $Q_2$ ersetzt sind, deren beiden anderen Enden an jeweils ein Dehnungsmeßstreifenpaar angelegt werden. Um Kontaktwiderstände und Kontaktpotentiale bei der Umschaltung auszumitteln, ist auch vorsehbar, jeweils bei einem Dehnungsmeßstreifenpaar zwei Messungen mit umgeschalteten Konstantstromquellen vorzunehmen. Dies ist durch gestrichelte Verbindungslinien angedeutet.

## Patentansprüche

1. Mehrkomponentenkraft- und -momentenmeßkörper mit Dehnungsmeßstreifen auf einem Meßkörper (Z), bei dem für die Erfassung der Längs- ($P_1$) und Querkräfte ($P_2$, $P_3$) und Momente ($M_1$, $M_2$, $M_3$) Dehnungsmeßstreifen (1 ... 8) so angeordnet sind, daß sich den Kräften ($P_1$ ... $P_3$) und Momenten ($M_1$ ... $M_3$) zuordbare Meßwerte von aus den Dehnungsmeßstreifen (1 ... 8) paarweise zusammenschaltbaren Halbbrücken ergeben, wobei für einen einheitlichen Meßkörper (Z) mit definierter Krafteinleitung eine solche Anzahl von in vorgegebener Ausrichtung zur Beanspruchungsrichtung des Meßkörpers (Z) angeordneten Dehnungsmeßstreifen (1 ... 8) vorgesehen ist, daß zu den Kräften ($P_1$ ... $P_3$) und Momenten ($M_1$ ... $M_3$) eindeutig zuorderbare Empfindlichkeiten entstehen und daß mit den an den Halbbrücken abgreifbaren Spannungen genügend viele Gleichungen zur Ermittlung der Kräfte ($P_1$ ... $P_3$) und Momente ($M_1$ ... $M_3$) aufstellbar sind und wobei die Dehnungsmeßstreifen (1 ... 8) an einem ihrer Enden untereinander parallelgeschaltet und die anderen Enden voneinander getrennt zugänglich sind und jeweils zur Auswertung der jeweiligen Brückenmeßspannung herausgeführt sind.

2. Mehrkomponentenkraft- und -momentenmeßkörper nach Anspruch 1, dadurch gekennzeichnet, daß zur Messung von drei Kräften ($P_1$ ... $P_3$) und drei Momenten ($M_1$ ... $M_3$) der Meßkörper ein an einem Ende fest eingespannter Hohlzylinder (Z) ist, dessen freies Ende mit dem Boden eines in sich starren überstülpten Krafteinleitungsbechers (K) starr verbunden ist, wobei der Becherrand über den Hohlzylinder ragt und am äußersten Becherrand die Kraftangriffspunkte für Querkräfte ($P_2$, $P_3$) sind, wodurch eine im mittleren Drittel der wirksamen Länge des Hohlzylinders liegende Einleitungsebene für die Querkräfte ($P_2$, $P_3$) bestimmt ist, und daß auf Umfangslinien (A, B, C) des Hohlzylinders (Z), die als Schnittlinien der Krafteinleitungsebene und mindestens einer zweiten parallel dazu liegenden Querschnittsebene mit der Mantelfläche des Hohlzylinders (Z) entstehen, mindestens sieben an einem in der Einleitungsebene liegenden XY-Koordinatensystem orientierten Dehnungsmeßstreifen (1 ... 7) derart aufgeklebt sind, daß je zwei in Richtung der Zylinderlängsachse und senkrecht dazu gleich ausgerichtete Dehnungsmeßstreifen (4, 8 bzw. 3, 7) sich paarweise diametral gegenüberstehen und mindestens zwei weitere Dehnungsmeßstreifen (2, 6) unter 45° zur Zylinderlängsachse mit unterschiedlichem Vorzeichen geneigt angeordnet sind.

3. Mehrkomponentenkraft- und -momentenmeßkörper nach Anspruch 2, dadurch gekennzeichnet, daß auf der von der Krafteinleitungsebene bestimmten ersten Umfangslinie (B) zwei in Umfangsrichtung orientierte Dehnungsmeßstreifen (3, 7) diametral einander gegenüberliegend und mit gleichen Azimutwinkeln zwei axial orientierte Dehnungsmeßstreifen (4, 8) sowie um 90° dazu versetzt ein Paar mit entgegengesetzten Vorzeichen um 45° gegen die Achsrichtung geneigte Dehnungsmeßstreifen (2, 6) auf einer von der ersten Umfangslinie (B) beabstandeten Umfangslinie (C) und auf einer auf der anderen Seite der ersten Umfangslinie (B) liegenden weiteren Umfangslinie (A) ein Paar mit gleichen Vorzeichen um 45° gegen die Achsrichtung geneigte Dehnungsmeßstreifen (1, 5) unter gleichem Azimutwinkel wie das erste Paar geneigter Dehnungsmeßstreifen (2, 6) angeordnet sind.

4. Mehrkomponentenkraft- und -momentenmeßkörper nach Anspruch 2, dadurch gekennzeichnet, daß auf der von der Krafteinleitungsebene bestimmten Umfangslinie (B) zwei in Umfangsrichtung orientierte Dehnungsmeßstreifen (1, 3) diametral einander gegenüberliegend und gegen diese um einen Azimutwinkel von 90° versetzt ein axial orientierter Dehnungsmeßstreifen (2) bzw. zwei übereinanderliegend mit entgegengesetzten Vorzeichen um 45° gegen die Achsrichtung geneigt orientierte Dehnungsmeßstreifen (4, 5) und auf einer zweiten Umfangslinie (C) zwei um 90° Azimutwinkel gegeneinander versetzte, axial bzw. in Umfangsrichtung orientierte Dehnungsmeßstreifen (7 bzw. 6) angeordnet sind.

5. Mehrkomponentenkraft- und -momentenmeßkörper nach Anspruch 2, dadurch gekennzeichnet, daß auf der von der Krafteinleitungsebene bestimmten Umfangslinie (B) zwei in Umfangsrichtung orientierte, diametral gegenüberliegende Dehnungsmeßstreifen (2, 4) und auf der weiteren Umfangslinie (A) zwei übereinanderliegend mit entgegengesetztem Vorzeichen um 45° gegen die Achsrichtung geneigt orientierte Dehnungsmeßstreifen (5, 6) in gleichem Azimutwinkel wie einer der auf der ersten Umfangslinie (B) angeordneten Dehnungsmeßstreifen (2) und zwei hierzu jeweils um + 90° bzw. — 90° Azimutwinkel versetzte, axial orientierte Dehnungsmeßstreifen (1, 3) angebracht sind und daß auf der zweiten Umfangslinie (C) zwei um 90° Azimutwinkel gegeneinander versetzte, axial bzw. in 45° zur Umfangslinie geneigt orientierte Dehnungsmeßstreifen (8, 7) angebracht sind, wobei der geneigte Dehnungsmeßstreifen (7) im gleichen Azimutwinkel wie die übereinanderliegenden Dehnungsmeßstreifen (5, 6) angeordnet ist.

6

6. Mehrkomponentenkraft- und -momentenmeßkörper nach Anspruch 1 oder einem der vorhergehenden Ansprüche, dadurch gekennzeichnet, daß die Dehnungsmeßstreifen (1 ... 8) durch ebensoviele einendig parallelgeschaltete hochohmige Widerstände ($R_1$ ... $R_8$) zu zwischen den Klemmen einer Stromquelle ($U_S$) parallelschaltbaren Serienkombinationen je eines Dehnungsmeßstreifens und eines Festwiderstandes mit herausgeführtem Verbindungspunkt zwischen Dehnungsmeßstreifen und Festwiderstand ergänzt sind.

7. Mehrkomponentenkraft- und -momentenmeßkörper nach Anspruch 6, dadurch gekennzeichnet, daß die Festwiderstände durch einendig parallelgeschaltete Stromquellen ersetzt sind, deren parallelgeschaltete Enden mit den parallelgeschalteten Enden der Dehnungsmeßstreifen verbunden sind.

8. Mehrkomponentenkraft- und -momentenmeßkörper nach Anspruch 7, dahingehend abgeändert, daß nur zwei einendig parallelgeschaltete, auf jeweils zwei Dehnungsmeßstreifen umschaltbare Stromquellen ($Q_1$, $Q_2$) vorgesehen sind.

**Claims**

1. Multicomponent force-sensing and moment-sensing body with strain gauges on a sensing body (Z), wherein for the detection of the longitudinal forces ($P_1$) and transverse forces ($P_2$, $P_3$) and moments ($M_1$, $M_2$, $M_3$) strain gauges (1 ... 8) are arranged in such a way that measured values which can be associated with the forces ($P_1$ ... $P_3$) and moments ($M_1$ ... $M_3$) result from half-bridges which can be interconnected in pairs out of the strain gauges (1 ... 8), there being provided for a uniform sensing body (Z) with defined force introduction such a number of strain gauges (1 ... 8) arranged in preset alignment in relation to the direction of stress of the sensing body (Z) that there develop sensitivities which can be clearly associated with the forces ($P_1$ ... $P_3$) and moments ($M_1$ ... $M_3$) and that with the voltages which can be measured at the half-bridges a sufficiently large number of equations can be set up for the determination of the forces ($P_1$ ... $P_3$) and moments ($M_1$ ... $M_3$), the strain gauges (1 ... 8) being connected in parallel at one of their ends one with another and the other ends being accessible, separate from each other, and in each case being brought out for the evaluation of the respective bridge measuring voltage.

2. Multicomponent force-sensing and moment-sensing body according to claim 1, characterised in that for the purpose of sensing three forces ($P_1$ ... $P_3$) and three moments ($M_1$ ... $M_3$) the sensing body is a hollow cylinder (Z) which is firmly clamped at one end and the free end of which is rigidly connected with the base of a force introduction bowl (K) which is rigid in itself and is slipped thereon, the bowl edge projecting over the hollow cylinder and the points of application of force for transverse forces ($P_2$, $P_3$) being at the outermost bowl edge, whereby an introduction plane for the transverse forces ($P_2$, $P_3$) lying in the middle third of the effective length of the hollow cylinder is determined, and in that on peripheral lines (A, B, C) of the hollow cylinder (Z), which develop as lines of intersection of the force introduction plane and at least of a second cross-sectional plane lying parallel thereto with the generated surface of the hollow cylinder (Z), at least seven strain gauges (1 ... 7) oriented on an XY system of coordinates lying in the introduction plane are stuck thereon in such a way that in each case two strain gauges (4, 8 or 3, 7 respectively), which are aligned alike in the direction of the longitudinal axis of the cylinder and perpendicular thereto, stand diametrically opposite each other in pairs and at least two further strain gauges (2, 6) are arranged so that they are inclined under 45° in relation to the longitudinal axis of the cylinder with differing sign.

3. Multicomponent force-sensing and moment-sensing body according to claim 2, characterised in that there are arranged on the first peripheral line (B), determined by the force introduction plane, two strain gauges (3, 7), which are oriented in a pheripheral direction, lying diametrically opposite each other, and with the same azimuth angles two axially oriented strain gauges (4, 8) as well as displaced by 90° thereto a pair of strain gauges (2, 6), which are inclined with opposite sign by 45° in the axial direction, on a peripheral line (C) at a distance from the first peripheral line (B) and on a further peripheral line (A) lying on the other side of the first peripheral line (B) a pair of strain gauges (1, 5), which are inclined with the same sign by 45° in the axial direction, under the same azimuth angle as the first pair of inclined strain gauges (2, 6).

4. Multicomponent force-sensing and moment-sensing body according to claim 2, characterised in that there are arranged on the peripheral line (B), determined by the force introduction plane, two strain gauges (1, 3), which are oriented in a peripheral direction, lying diametrically opposite each other, and displaced in respect of these by an azimuth angle of 90° an axially oriented strain gauge (2) or two strain gauges (4, 5) which are oriented, lying one upon the other, so that they are inclined with opposite sign by 45° in the axial direction and on a second peripheral line (C) two strain gauges (7 or 6) displaced in respect of each other by 90° azimuth angle and oriented axially or in a peripheral direction.

5. Multicomponent force-sensing and moment-sensing body according to claim 2, characterised in that there are provided on the peripheral line (B), determined by the force introduction plane, two strain gauges (2, 4), oriented in a peripheral direction and lying diametrically opposite each other, and on the further peripheral line (A) two strain gauges (5, 6), which are oriented, lying one upon the other, so that they are inclined with opposite sign by 45° in the axial direction, in the same azimuth angle as one of the strain gauges (2) arranged on the first peripheral line (B) and two axially oriented strain gauges (1, 3), which are displaced thereto in each case by + 90° or — 90° azimuth angle, and in that there are provided on the second peripheral line (C) two strain gauges (8, 7) displaced by 90° azimuth angle in respect of each other and oriented axially or so that they are inclined by 45° in relation to the peripheral line, the inclined strain gauge (7) being arranged in the same azimuth angle as the strain gauges (5, 6) lying one upon the other.

6. Multicomponent force-sensing and moment-sensing body according to claim 1 or one of the preceding claims, characterised in that the strain gauges (1 ... 8) are supplemented by just as many high-valued resistors ($R_1$ ... $R_8$), connected in parallel single-endedly, to form series combinations, which can be connected in parallel between the terminals of a current source ($U_S$), of in each case one strain gauge and a fixed resistor with brought out connection point between strain gauge and fixed resistor.

7. Multicomponent force-sensing and moment-sensing body according to claim 6, characterised in that the fixed resistors are replaced by current sources which are connected in parallel single-endedly and the parallel-connected ends of which are linked with the parallel-connected ends of the strain gauges.

8. Multicomponent force-sensing and moment-sensing body according to claim 7, modified to the effect that only two current sources ($Q_1$, $Q_2$), which are connected in parallel single-endedly and which can be switched over to, in each case, two strain gauges, are provided.

## Revendications

1. Corps de mesure de forces et de moments à plusieurs composantes, comportant des jauges extensométriques placées sur un corps de mesure (Z) et dans lequel pour la détection de la force longitudinale ($P_1$) et des forces transversales ($P_2$, $P_3$) et des moments ($M_1$, $M_2$, $M_3$), des jauges extensométriques (1 ... 8) sont disposées de telle sorte que des valeurs de mesure pouvant être associées aux forces ($P_1$ ... $P_3$) et aux moments ($M_1$ ... $M_3$) sont fournies par des demi-ponts pouvant être formés par raccordement, par couples, de jauges extensométriques (1 ... 8), auquel cas pour un corps uniforme de mesure (Z), sur lequel on a une application définie de forces, est prévu un nombre tel de jauges extensométriques (1 ... 8) disposées selon un alignement prédéterminé par rapport à la direction de contrainte du corps de mesure (Z), que l'on obtient des sensibilités pouvant être associées de façon claire aux forces ($P_1$ ... $P_3$) et aux moments ($M_1$ ... $M_3$), et qu'avec les tensions pouvant être prélevées au niveau des demi-ponts, on peut établir un nombre suffisamment élevé de relations pour déterminer les forces ($P_1$ ... $P_3$) et les moments ($M_1$ ... $M_3$), et que les jauges extensométriques (1 ... 8) sont branchées en parallèle au niveau d'une de leurs extrémités, tandis que les autres extrémités sont accessibles séparément les unes des autres et sont ressorties de manière à permettre respectivement l'évaluation de la tension respective de mesure du pont.

2. Corps de mesure de forces et de moments à plusieurs composantes suivant la revendication 1, caractérisé par le fait que pour la mesure de trois forces ($P_1$ ... $P_3$) et de trois moments ($M_1$ ... $M_3$), le corps de mesure est un cylindre creux (Z) dont une extrémité est fixée par serrage et dont l'extrémité libre est reliée rigidement au fond d'une coupelle en soi rigide (K) d'application des forces, emmanchée sur cette extrémité, le bord de la coupelle faisant saillie au-delà du cylindre creux et les points d'application des forces transversales ($P_2$, $P_3$) étant situés sur le bord le plus extérieur de la coupelle, ce qui permet de déterminer un plan d'application des forces transversales ($P_2$, $P_3$), situé dans le tiers central de la longueur active du cylindre creux, et qu'au moins sept jauges extensométriques (1 ... 7), orientées par rapport à un système de coordonnées XY situé dans le plan d'application, sont collées sur des lignes circonférentielles (A, B, C) du cylindre creux (Z); qui sont obtenus sous la forme de lignes d'intersection du plan d'application des forces et d'au moins un second plan de coupe transversale, parallèle au précédent, avec la surface enveloppe du cylindre creux (Z), de telle sorte que deux jauges extensométriques respectives (4, 8 ou 3, 7), qui s'étendent de façon identique dans la direction de l'axe longitudinal du cylindre et perpendiculairement à cet axe sont disposées diamétralement en vis-à-vis, par couples, et au moins deux autres jauges extensométriques (2, 6) sont inclinées à 45° par rapport à l'axe longitudinal du cylindre, avec des signes différents.

3. Corps de mesure de forces et de moments à plusieurs composantes suivant la revendication 2, caractérisé par le fait que deux jauges extensométriques (3, 7) orientées dans la direction circonférentielle sont disposées dans des positions diamétralement opposées sur la première ligne circonférentielle (B) déterminée par le plan d'application des forces, et que deux jauges extensométriques (4, 8) orientées axialement et possédant des angles azimutaux identiques ainsi qu'un couple de jauges extensométriques (2, 6), décalées de 90° l'une par rapport à l'autre et inclinées à 45° avec des signes opposés par rapport à la direction axiale, sont disposées sur une ligne circonférentielle (C) distante de la première ligne circonférentielle (B), et qu'un couple de jauges extensométriques (1, 5) inclinées avec le même signe à 45° par rapport à la direction de l'axe et faisant le même angle azimutal que le premier couple de jauges extensométriques (2, 6) sont disposées sur une autre ligne circonférentielle (A) située de l'autre côté de la première ligne circonférentielle (B).

4. Corps de mesure de forces et de moments à plusieurs composantes suivant la revendication 2,

caractérisé par le fait que deux jauges extensométriques (1, 3) orientées dans la direction circonférentielle sont disposées en étant diamétralement opposées sur la ligne circonférentielle (B) déterminée par le plan d'application des forces et qu'une jauge extensométrique (2) orientée axialement ou deux jauges extensométriques (4, 5) placées l'une au-dessus de l'autre et orientées à 45° avec des signes opposés par rapport à la direction de l'axe sont disposées en étant décalées d'un angle azimutal de 90° par rapport aux jauges (1, 3), et que deux jauges extensométriques (7 ou 6) faisant entre elles un angle de décalage azimutal de 90° et orientées axialement ou dans la direction circonférentielle, sont disposées sur une seconde ligne circonférentielle (C).

5. Corps de mesure de forces et de moments à plusieurs composantes suivant la revendication 2, caractérisé par le fait que deux jauges extensométriques (2, 4) orientées dans la direction circonférentielle et situées dans des positions diamétralement opposées sont disposées sur la ligne circonférentielle (B) déterminée par le plan d'application des forces, et que deux jauges extensométriques (5, 6) superposées et orientées à 45° avec des signes opposés par rapport à la direction axiale et possédant le même angle azimutal que l'une des jauges extensométriques (2) disposées sur la première ligne circonférentielle (B) et deux jauges extensométriques (1, 3) orientées axialement et dont l'angle azimutal est décalé respectivement de + 90° et de — 90° par rapport à la jauge (2) sont disposées sur l'autre ligne circonférentielle (A), et que deux jauges extensométriques (8, 7) dont les angles azimutaux diffèrent de 90° et qui sont orientées axialement ou en étant inclinées de 45° par rapport à la ligne circonférentielle sont disposées sur la seconde ligne circonférentielle (C), auquel cas la jauge extensométrique inclinée (7) est disposée de manière à faire le même angle azimutal que les jauges extensométriques superposées (5, 6).

6. Corps de mesure de forces et de moments à plusieurs composantes suivant la revendication 1 ou l'une des revendications précédentes, caractérisé par le fait que les jauges extensométriques (1, 8) sont complétées par un nombre identique de résistances de forte valeur ohmique ($R_1$ ... $R_8$) branchées en parallèle au niveau d'une de leurs extrémités, pour former des combinaisons série, pouvant être branchées en parallèle entre les bornes d'une source de courant ($U_S$), d'une jauge extensométrique respective et d'une résistance fixe, le point de jonction entre la jauge extensométrique et la résistance fixe étant ressorti.

7. Corps de mesure de forces et de moments à plusieurs composantes suivant la revendication 6, caractérisé par le fait que les résistances fixes sont remplacées par des sources de courant branchées en parallèle au niveau d'une de leurs extrémités, et dont les extrémités branchées en parallèle sont reliées aux extrémités, branchées en parallèle, des jauges extensométriques.

8. Corps de mesure de forces et de moments à plusieurs composantes suivant la revendication 7, modifié en ce sens qu'il est prévu seulement deux sources de courant ($Q_1$, $Q_2$) branchées en parallèle par une de leurs extrémités et dont le raccordement peut être commuté entre deux jauges extensométriques.

FIG 1

FIG 2

FIG 3

FIG 4

FIG 5

FIG 6

FIG 7